# EUROPEAN PATENT SPECIFICATION

(11) **EP 1 586 022 B1**
(45) Date of publication and mention of the grant of the patent: **27.07.2016**
(21) Application number: 03754833.6
(22) Date of filing: 22.09.2003
(51) Int. Cl.: G06F 17/30

(54) **SYSTEM AND METHOD FOR NAVIGATING AN HMI**
SYSTEM UND VERFAHREN ZUM NAVIGIEREN EINER HMI
SYSTEME ET PROCEDE DE NAVIGATION DANS UNE INTERFACE HOMME-MACHINE (IHM)

(30) Priority: 23.09.2002 US 413010 P; 18.09.2003 US 666227
(43) Date of publication of application: 19.10.2005
(73) Proprietor: Siemens Industry, Inc., Alpharetta, GA 30005-4437 (US)
(72) Inventor: POERNER, Colleen, Somerset, NJ 08873 (US); MUENZEL, Georg, Plainsboro, NJ 08536 (US); LI, Yufeng, Hamden, CT 06517 (US)
(74) Representative: Maier, Daniel Oliver
(86) International application number: PCT/US2003/029856
(87) International publication number: WO 2004/027592

(56) References cited:
- WO-A-00/73917
- WO-A1-01/53974
- US-A- 5 701 137
- US-A- 5 877 775
- PRECKSHOT G G ET AL: "MENU-DRIVEN MENU EDITOR AND ASSOCIATED MENU SYSTEM" REVIEW OF SCIENTIFIC INSTRUMENTS, AIP, MELVILLE, NY, US, vol. 59, no. 8, 2, 1 August 1988 (1988-08-01), pages 1777-1779, XP000122373 ISSN: 0034-6748

## Description

### Background

United States Patent No. 5,911,145 (Arora) cites a "method and apparatus for a structure editor implementing a 'top-down' approach to designing a Web page. The user uses a 'drag and drop' interface to add, delete, and move display elements to define the hierarchy of the site and to define the layout of each page in the site. The present invention automatically generates a layout for each page. This layout contains display elements that represent the links between pages of the site. The present invention automatically adds, removes, and deletes the appropriate links between the pages of the site as the user moves display elements. After the user has defined the hierarchy of the site and the layout of each page in the site, the user 'publishes' the site. The publish function automatically generates HTML for each page of the site in accordance with the display elements of each page, yielding true WYSIWYG pages for the site." See Abstract.

United States Patent No. 6,237,006 (Weinberg) cites a "visual Web site analysis program, implemented as a collection of software components, provides a variety of features for facilitating the analysis and management of web sites and Web site content. A mapping component scans a Web site over a network connection and builds a site map which graphically depicts the URLs and links of the site. Site maps are generated using a unique layout and display methodology which allows the user to visualize the overall architecture of the Web site. Various map navigation and URL filtering features are provided to facilitate the task of identifying and repairing common Web site problems, such as links to missing URLs. A dynamic page scan feature enables the user to include dynamically-generated Web pages within the site map by capturing the output of a standard Web browser when a form is submitted by the user, and then automatically resubmitting this output during subsequent mappings of the site. The Web site analysis program is implemented using an extensible architecture which includes an API that allows plug-in applications to manipulate the display of the site map. Various plug-ins are provided which utilize the API to extend the functionality of the analysis program, including an action tracking plug-in which detects user activity and behavioral data (link activity levels, common site entry and exit points, etc.) from server log files and then superimposes such data onto the site map." See Abstract.

United States Patent No. 6,282,454 (Papadopoulos) cites a "control system includes an Internet web interface to a network of at least one programmable logic control system running an application program for controlling output devices in response to status of input devices. The Web interface runs Web pages from an Ethernet board coupled directly to the PLC back plane and includes an HTTP protocol interpreter, a PLC back plane driver, a TCP/IP stack, and an Ethernet board kernel. The Web interface provides access to the PLC back plane by a user at a remote location through the Internet. The interface translates the industry standard Ethernet, TCP/IP and HTTP protocols used on the Internet into data recognizable to the PLC. Using this interface, the user can retrieve all pertinent data regarding the operation of the programmable logic controller system." See Abstract.

United States Patent No. 6,421,571 (Spriggs) cites an "industrial plant asset management system comprising of a synchronized multiple view graphical user interface combining simultaneous real time and database display capability, a database including a knowledge manager and having input and output interfaces, a normalizing data acquisition module with real time and database interfaces, and a variety of device dependent data collector modules with associated signal conditioning and processing devices for providing an environment for development and deployment of visual models for monitoring plant assets." See Abstract.

US 5877775 describes a method of generating a three-dimensional representation of a hierarchical data structure.

### Summary

The invention provides a method for configuring HMI user screen navigation according to claim 1.

Further embodiments are provided according to the dependent claims. A further embodiment provides a device for providing a representation of user screens for an HMI according to the method of the invention.

### Brief Description of the Drawings

A wide array of potential embodiments can be better understood through the following detailed description and the accompanying drawings in which:
**FIG. 1** is a block diagram of an exemplary embodiment of a system 1000;
**FIG. 2** is a block diagram of an exemplary embodiment of an information device 2000;
**FIG. 3** is a flow chart of an exemplary embodiment of a method 3000;
**FIG. 4** is a flow chart of an exemplary embodiment of a method 4000; **FIG. 5** is a flow chart of an exemplary embodiment of a method 5000; **FIG. 6** is a diagram of exemplary embodiment of a user interface 6000; and
**FIG. 7** is a diagram of exemplary embodiment of a user interface 7000.

### Definitions

When the following terms are used herein, the accompanying definitions apply:

**HMI -** a human machine interface used for monitoring, programming, and/or controlling automation machines and/or processes. An HMI can, for example, interpret communications from a human operator of an industrial plant to an automated machine controller, and vice versa.

**HMI user screen -** a visual display of an HMI renderable via a monitor.

**render** - make perceptible to a human.

**rendition** - a perceptible result of rendering.

**HMI screen navigation editor -** a computer-based tool for specifying how a user can navigate between HMI user screens.

**navigation control -** a control located on an HMI user screen and containing, for example, user-definable buttons which, when activated, link to other HMI screens.

**HMI screen node -** a miniaturized visual representation of an HMI user screen.

**node -** an HMI screen node.

**collection -** a plurality of nodes.

**organization -** an identification of the specific nodes within a given collection.

**hierarchy -** a description of the relationships within a collection in which at least some of the nodes are familial.

**arrangement -** a renderable visual pattern of a collection.

**tree arrangement -** an arrangement in which familial nodes are connected by line segments.

**view -** the arrangement of a collection of nodes as currently rendered.

**familial -** a collection of nodes that are related as a family, such as via a parent-child relationship or as descendents from a common parent.

**leaf -** a node having no descendents.

**parent -** a node having at least one descendent.

**child -** a node having at least one parent.

**nuclear children -** all children of a given parent, the children occupying a common level.

**root -** a node having no parent. A root can be a parent but can not be a child.

**collision -** a visual intersection or overlap of at least two nodes.

**visibility -** the state, for a node, of being viewable or not viewable by a user.

**collapse -** to render a decreased portion of a collection.

**expand -** to render an increased portion of a collection.

**level -** a measure of how far removed a node is, relationally, from its root.

**generation -** a collection of nodes equally distant, relationally, from the root level.

**inter-generational -** between generations

**intra-generational -** within a generation

**node spacing -** a measure of a visual distance between two adjacent nodes relative to one or more dimensions of the nodes.

### Detailed Description

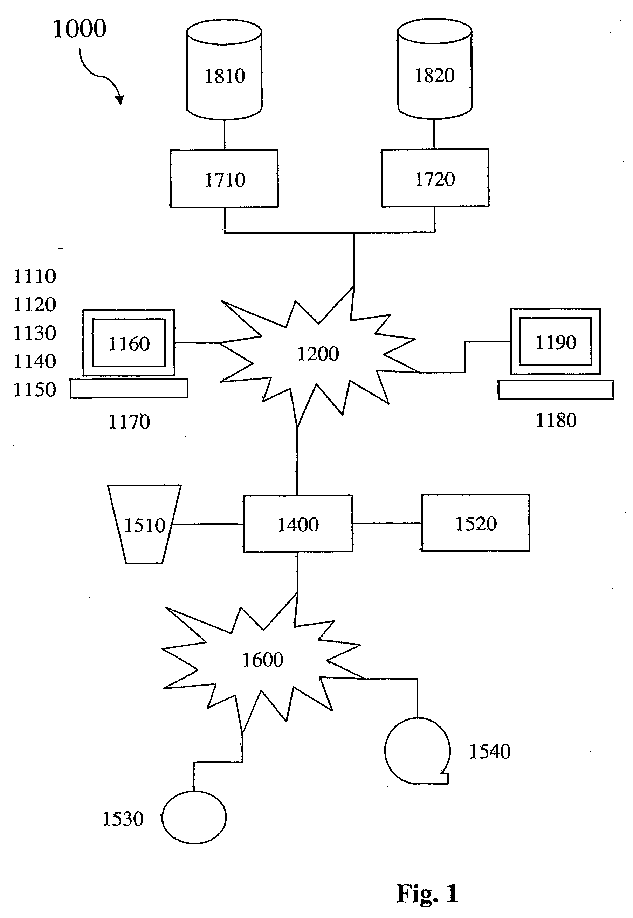

**FIG. 1** is a simplified block diagram of an exemplary embodiment of a system 1000. An HMI 1110 can comprise an HMI navigation engine 1120 which can render a user interface 1-130 of an HMI user screen 1140 and/or an HMI screen navigation editor 1150 via a rendering 1160 displayed on an information device 1170.

HMI 1110, HMI navigation engine 1120, user interface 1130, and/or HMI user screen 1140 can be based on one or more proprietary and/or non-Web-based protocols, that is one or more protocols other than a standard or Web protocol such as HTML, SGML, XML, XSL, etc.

As used herein, the term "engine" means a hardware, firmware, and/or software-based device adaptable to process machine-readable instructions to perform a specific task. An engine can act upon information by manipulating, analyzing, modifying, and/or converting information. An engine can communicate with another engine, a processor, a memory, and/or an I/O device.

HMI user screen 1140 can be one of many HMI user screens. Rendering 1160 can be one of many renderings. For example, via information device 1170 and/or an additional information device 1180, the same or a different user can perceive a different rendering 1190 of HMI 1110 and/or any of its components. HMI 1110, HMI navigation engine 1120, and/or HMI screen navigation editor 1150 can run locally on information device 1170, 1180 and/or can be provided via a network 1200 from an HMI server 1400. Via a direct connection, or via a network 1600, HMI server 1400 can obtain information from process devices 1510, 1520, 1530, 1540, such as one or more sensors, actuators, data acquisition devices, control devices, automation devices, information devices, etc. HMI server 1400 can also provide commands and/or information to process devices 1510, 1520, 1530, 1540.

Via network 1200, information devices 1170, 1180, and/or HMI server 1400 can communicate information with information servers 1710, 1720, to which any number of information stores 1810, 1820 (e.g., archives, databases, memory devices, etc.) can be connected. Information servers 1710, 1720 can serve any of internal information, external information, pictures, graphics, video, animation, alarms, archived information, web information, process information, application programming interfaces ("API's"), supervisory control and data acquisition ("SCADA") extensions, configuration tools, software, databases, and/or specifications, etc.

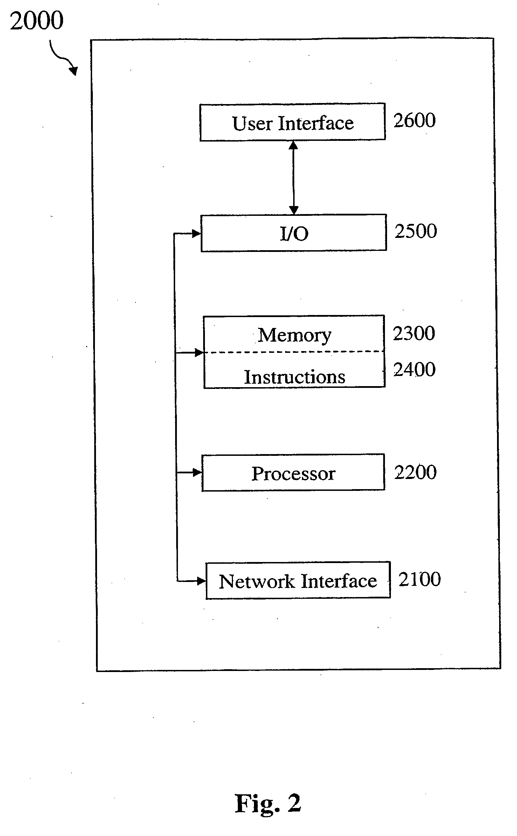

**FIG. 2** is a simplified block diagram of an exemplary embodiment of an information device 2000, which can represent any of information device 1170, 1180, server 1400, server 1710, and/or server 1720 of FIG. 1. Information device 2000 can include well-known components such as one or more network interfaces 2100, one or more processors 2200, one or more memories 2300 containing instructions 2400, and/or one or more input/output (I/O) devices 2500, etc. Via one or more I/O devices 2500, a user interface 2600 can be provided.

As used herein, the term "information device" means any device capable of processing information , such as any general purpose and/or special purpose computer, such as a personal computer, workstation, server, minicomputer, mainframe, supercomputer, computer terminal, laptop, wearable computer, and/or Personal Digital Assistant (PDA), mobile terminal, Bluetooth device, communicator, "smart" phone (such as a Handspring Treo-like device), messaging service (e.g., Blackberry) receiver, pager, facsimile, cellular telephone, a traditional telephone, telephonic device, a programmed microprocessor or microcontroller and/or peripheral integrated circuit elements, an ASIC or other integrated circuit, a hardware electronic logic circuit such as a discrete element circuit, and/or a programmable logic device such as a PLD, PLA, FPGA, or PAL, or the like, etc. In general any device on which resides a finite state machine capable of implementing at least a portion of a method, structure, and/or or graphical user interface described herein may be used as an information device. An information device can include well-known components such as one or more network interfaces, one or more processors, one or more memories containing instructions, and/or one or more input/output (I/O) devices, one or more user interfaces, etc.

As used herein, the term "network interface" means any device, system, or subsystem capable of coupling an information device to a network. For example, a network interface can be a telephone, cellular phone, cellular modem, telephone data modem, fax modem, wireless transceiver, ethernet card, cable modem, digital subscriber line interface, bridge, hub, router, or other similar device.

As used herein, the term "processor" means a device for processing machine-readable instruction. A processor can be a central processing unit, a local processor, a remote processor, parallel processors, and/or distributed processors, etc. The processor can be a general-purpose microprocessor, such the Pentium III series of microprocessors manufactured by the Intel Corporation of Santa Clara, California. In another embodiment, the processor can be an Application Specific Integrated Circuit (ASIC) or a Field Programmable Gate Array (FPGA) that has been designed to implement in its hardware and/or firmware at least a part of an embodiment disclosed herein.

As used herein, a "memory device" means any hardware element capable of data storage. Memory devices can comprise non-volatile memory, volatile memory, Random Access Memory, RAM, Read Only Memory, ROM, flash memory, magnetic media, a hard disk, a floppy disk, a magnetic tape, an optical media, an optical disk, a compact disk, a CD, a digital versatile disk, a DVD, and/or a raid array, etc.

As used herein, the term "firmware" means machine-readable instructions that are stored in a read-only memory (ROM). ROM's can comprise PROMs and EPROMs.

As used herein, the term "I/O device" means any sensory-oriented input and/or output device, such as an audio, visual, haptic, olfactory, and/or taste-oriented device, including, for example, a monitor, display, projector, overhead display, keyboard, keypad, mouse, trackball, joystick, gamepad, wheel, touchpad, touch panel, pointing device, microphone, speaker, video camera, camera, scanner, printer, haptic device, vibrator, tactile simulator, and/or tactile pad, potentially including a port to which an I/O device can be attached or connected.

As used herein, the term "haptic" means both the human sense of kinesthetic movement and the human sense of touch. Among the many potential haptic experiences are numerous sensations, body-positional differences in sensations, and time-based changes in sensations that are perceived at least partially in non-visual, non-audible, and non-olfactory manners, including the experiences of tactile touch (being touched), active touch, grasping, pressure, friction, traction, slip, stretch, force, torque, impact, puncture, vibration, motion, acceleration, jerk, pulse, orientation, limb position, gravity, texture, gap, recess, viscosity, pain, itch, moisture, temperature, thermal conductivity, and thermal capacity.

As used herein, the term "user interface" means any device for rendering information to a user and/or requesting information from the user. A user interface can include textual, graphical, audio, video, animation, and/or haptic elements. A textual element can be provided, for example, by a printer, monitor, display, projector, etc. A graphical element can be provided, for example, via a monitor, display, projector, and/or visual indication device, such as a light, flag, beacon, etc. An audio element can be provided, for example, via a speaker, microphone, and/or other sound generating and/or receiving device. A video element or animation element can be provided, for example, via a monitor, display, projector, and/or other visual device. A haptic element can be provided, for example, via a very low frequency speaker, vibrator, tactile stimulator, tactile pad, simulator, keyboard, keypad, mouse, trackball, joystick, gamepad, wheel, touchpad, touch panel, pointing device, and/or other haptic device, etc.

A user interface can include one or more textual elements such as, for example, one or more letters, number, symbols, etc. A user interface can include one or more graphical elements such as, for example, an image, photograph, drawing, icon, window, title bar, panel, sheet, tab, drawer, matrix, table, form, calendar, outline view, frame, dialog box, static text, text box, list, pick list, pop-up list, pull-down list, menu, tool bar, dock, check box, radio button, hyperlink, browser, button, control, palette, preview panel, color wheel, dial, slider, scroll bar, cursor, status bar, stepper, and/or progress indicator, etc. A textual and/or graphical element can be used for selecting, programming, adjusting, changing, specifying, etc. an appearance, background color, background style, border style, border thickness, foreground color, font, font style, font size, alignment, line spacing, indent, maximum data length, validation, query, cursor type, pointer type, autosizing, position, and/or dimension, etc. A user interface can include one or more audio elements such as, for example, a volume control, pitch control, speed control, voice selector, and/or one or more elements for controlling audio play, speed, pause, fast forward, reverse, etc. A user interface can include one or more video elements such as, for example, elements controlling video play, speed, pause, fast forward, reverse, zoom-in, zoom-out, rotate, and/or tilt, etc. A user interface can include one or more animation elements such as, for example, elements controlling animation play, pause, fast forward, reverse, zoom-in, zoom-out, rotate, tilt, color, intensity, speed, frequency, appearance, etc. A user interface can include one or more haptic elements such as, for example, elements utilizing tactile stimulus, force, pressure, vibration, motion, displacement, temperature, etc.

In certain exemplary embodiments, via one or more user interfaces 2600 one or more user specifications can be created, requested, provided, received, revised, and/or deleted; one or more HMI user screens can be created, requested, received, rendered, viewed, revised, and/or deleted; an HMI screen navigation editor can be run, requested, received, rendered, interacted with, programmed, and/or revised; and/or a collection of nodes can be created, requested, received, rendered, viewed, interacted with, revised, and/or deleted. In certain exemplary embodiments, an HMI navigation engine, running on and/or via an information device 2000, can provide any or all of these functions.

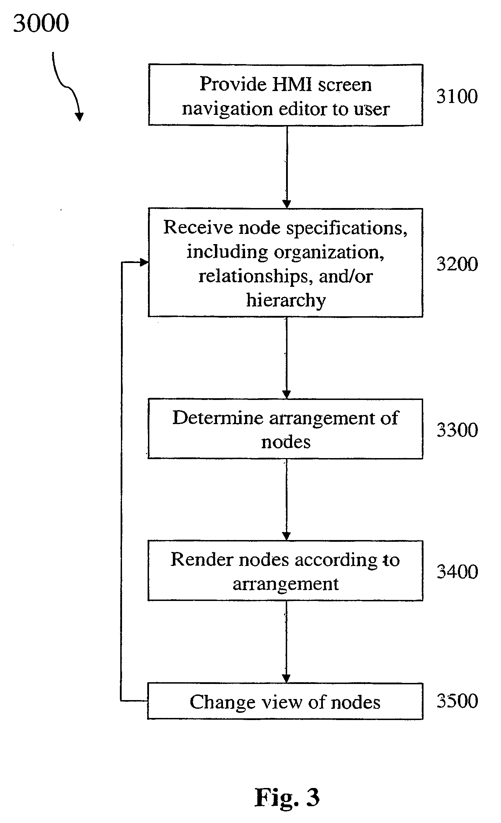

**FIG. 3** is a simplified flow chart of an exemplary embodiment of a method 3000. At activity 3100, an HMI screen navigation editor can be provided by an HMI navigation engine to a user. The HMI screen navigation editor can allow a user to create a node, revise a node, delete a node, indicate and/or identify each node belonging to a collection of nodes thereby defining an organization, create, revise, and/or delete relationships between nodes in the collection, and/or create, describe, revise, and/or delete a hierarchy among at least certain nodes of the collection. The HMI screen navigation editor can allow a user to specify various display aspects of nodes. The HMI screen navigation editor can allow a user to specify navigation controls for views and/or user screens.

At activity 3200, a user can provide to the HMI screen navigation editor various specifications for one or more nodes of a collection of nodes, such as node existence, an organization of the collection of nodes, relationships between the nodes, and/or a hierarchy of the nodes. In certain embodiments, the creation of a node can be specified by any of a wide variety of manners, including for example, utilizing a menu selection, palette selection, clicking and dragging, drag and drop, copy and paste, and/or keyboard shortcut (i.e., a softkey, such as an automatically specified softkey or a user-specified softkey), etc. The movement of a node can be specified by any of a wide variety of manners, including for example, clicking and dragging, arrow keys, keyboard shortcut, and/or menu command, etc. Relationships between nodes can be specified by any of a wide variety of manners, including for example, selecting a parent node and a child node, selecting a first node and a second familial or non-familial node, drawing relationship indication line from a first node to a second related node, spawning a child node from its parent, and/or cloning a child node from a sibling, etc. Any of a wide variety of relationship indicators can be specified, including icons, text, symbols, lines between related nodes, etc.

Likewise, any such specifications, including nodes and/or relationships, can be revised and/or deleted. Thus, the organization, relationships, and/or hierarchy of a collection of nodes can be specified by a user.

Moreover, a user can specify various display attributes of the nodes and/or relationship indicators, such as the inter-generational spacing, intra-generational spacing, node shape, node wall thickness, node opacity, node size, node color, text font, text size, text style, relationship indicator type, relationship indicator line thickness, relationship indicator line style, line color, line pattern, arrowhead vs. no arrowhead, arrowhead style, arrowhead size, etc.

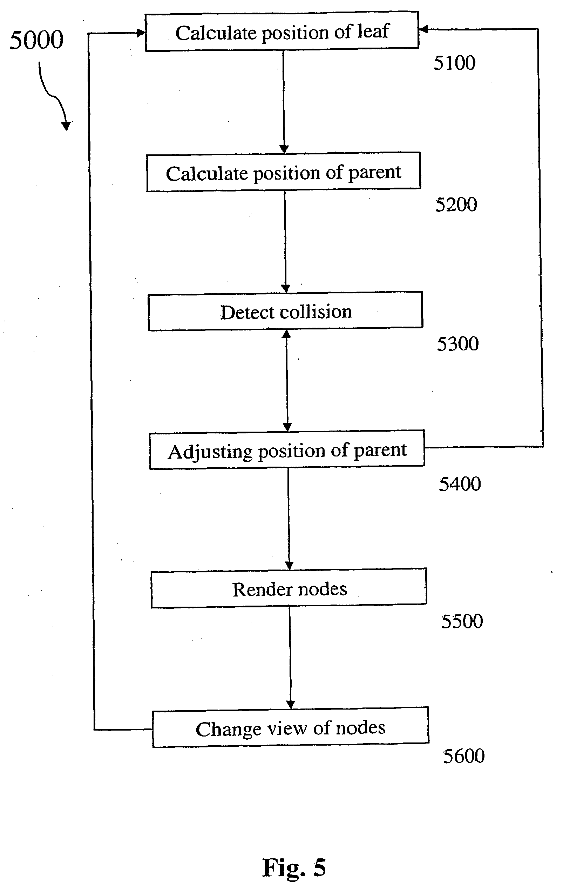

At activity 3300, in response to the specifications and/or one or more predetermined arrangement parameters, the HMI navigation engine can determine an arrangement of the collection of nodes, such as a visually attractive arrangement. Details of this activity are provided under method 5000 of FIG. 5. The predetermined arrangement parameters can include upper and/or lower limits on inter-generational spacing, intra-generational spacing, nuclear children spacing, inter-generational alignment, intra-generational alignment, nuclear children alignment, node size, text size, arrangement algorithm preferences, etc. For example, an arrangement parameter can specify that a parent is to be aligned centrally to all of its children. As another example, an arrangement parameter can specify that all nuclear children are to be separated equally. As yet another example, an arrangement parameter can specify that a arrangement is to be a tree arrangement, a vertical tree arrangement, and/or a horizontal tree arrangement. In certain embodiments, the specification of arrangement parameters can be created, revised, and/or deleted by a user.

At activity 3400, the HMI navigation engine can render the nodes according to the determined arrangement. The user can specify changes to various display attributes of the screen, nodes, and/or relationship indicators that do not affect the view of the nodes, such as for example, changing the background color of the screen, changing text color, changing line color or pattern, changing node color or wall pattern, vertically scrolling the screen, horizontally scrolling the screen, panning the screen, and/or potentially, changing the size of the screen or window, etc.

At activity 3500, the user can specify a change of a view of the nodes. The view can be changed, for example, by zooming (in or out), changing the visibility of one or more nodes (e.g., a parent and its descendents), collapsing one or more nodes, expanding one or more nodes, rotating a collection of nodes, selecting a subset of the collection of nodes, selecting a superset of the collection of nodes, selecting a different collection of nodes, and/or potentially, changing the size of the screen or window, etc. Upon a change in the view, the HMI navigation engine can return to activity 3200, and check for any changes in node specifications and then proceed to activity 3300 and determine a node arrangement for the desired view and/or specifications.

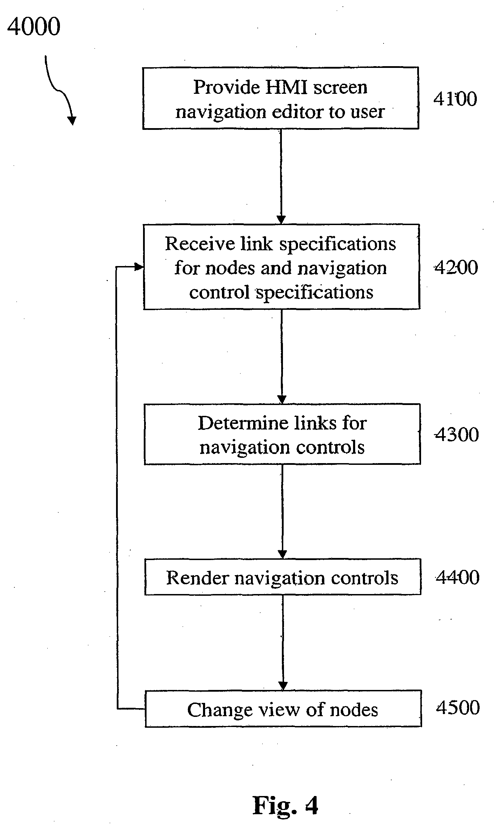

**FIG. 4** is a simplified flow chart of an exemplary embodiment of a method 4000, which can be used for creating and/or revising a navigation control bar and/or navigation controls for one or more HMI user screens. A navigation control can be activatable to cause a different HMI user screen to be rendered and/or a different rendering of a present HMI user screen to be rendered.

At activity 4100, the HMI navigation engine can provide the HMI screen navigation editor to a user. At activity 4200, the HMI navigation engine can receive navigation control specifications, such as for example, via the navigation editor, from a memory, from another program, etc. The HMI navigation engine can receive specifications for one or more navigation control regions, such as a navigation control bar, including, for example, a size, color, shape, border, position, docking, orientation, etc. of one or more of the navigation control regions. Moreover, the HMI navigation engine can receive specifications for navigation controls, such as navigation buttons, icons, text, hyperlinks, etc., rendered within the navigation control region, including for example, a size, color, shape, border, position, orientation, spacing, arrangement, activation action, keyboard shortcut, etc. for one or more of the navigation controls. Further, the HMI navigation engine can receive specifications for any navigation control descriptive material, such as text, symbols, and/or icons, associated with the navigation controls, including for example, a size, color, shape, position, orientation, text font, text style, spacing, kerning, leading, content, etc. of the descriptive material.

At activity 4300, the HMI navigation engine can create, revise, and/or delete a one or more navigation control regions, navigation controls, links associated with navigation controls, and/or navigation control descriptive materials for a given HMI user screen based on the specifications for any of the organization, relationships, and/or hierarchy of the nodes associated with the given HMI user screen and/or the navigation control specifications. The HMI navigation engine can verify that an existing navigation control region, navigation controls, navigation control descriptive material, and/or links associated with existing navigation controls for a given HMI user screen are still valid and/or desired.

- At activity 4400, the HMI navigation engine can render the navigation control region, navigation controls, and/or navigation control descriptive material with a rendering of a user screen. The navigation control region, navigation controls, and/or navigation control descriptive material can be rendered according to the relevant specifications received for those items and/or based on the specifications for any of the organization, relationships, and/or hierarchy of the nodes associated with the given HMI user screen. Once rendered, activation of a navigation control can cause a different user screen to be rendered and/or a different rendering (e.g., zoomed, panned, scrolled, rotated, etc.) of a current user screen to be rendered.

At activity 4500, a request can be received by the HMI navigation engine to change the user screen. For example, the request can be based on a user's activation of a navigation control, via which a different user screen is requested to be rendered and/or a different rendering of a current user screen is requested to be rendered.

In response, method 4000 can loop back to activity 4200 to check for any revisions to the specifications, and then proceed to activity 4300.

**FIG. 5** is a simplified flow chart of an exemplary embodiment of a method 5000, which can be used for determining an arrangement of a collection of nodes, as described at activity 3300 of method 3000 of FIG. 3. At activity 5100, based on a predetermined collection of nodes, the HMI navigation engine can calculate a position of a leaf node from the collection of nodes. At activity 5200, the HMI navigation engine can calculate a position of a parent of the leaf. At activity 5300, the HMI navigation engine can detect a collision between the position of the leaf and the position of its parent and/or between the position of the parent and the position of another node. In response to a detected collision, at activity 5400, the HMI navigation engine can repeatedly (i.e., recursively) adjust the position of the parent until no collisions are detected. Afterwards, the HMI navigation engine can proceed to a different node in the collection and repeat activities 5100 through 5400 until non-colliding positions for all nodes in the collection have been determined, at which point the HMI navigation engine has determined an arrangement for the collection of nodes. Then, at activity 5500, the HMI navigation engine can render the collection of nodes according to the determined arrangement. At activity 5600, a request can be received by the HMI navigation engine, from a user for example, to change a view of the collection of nodes. In response, method 5000 can be repeated by looping back to activity 5100.

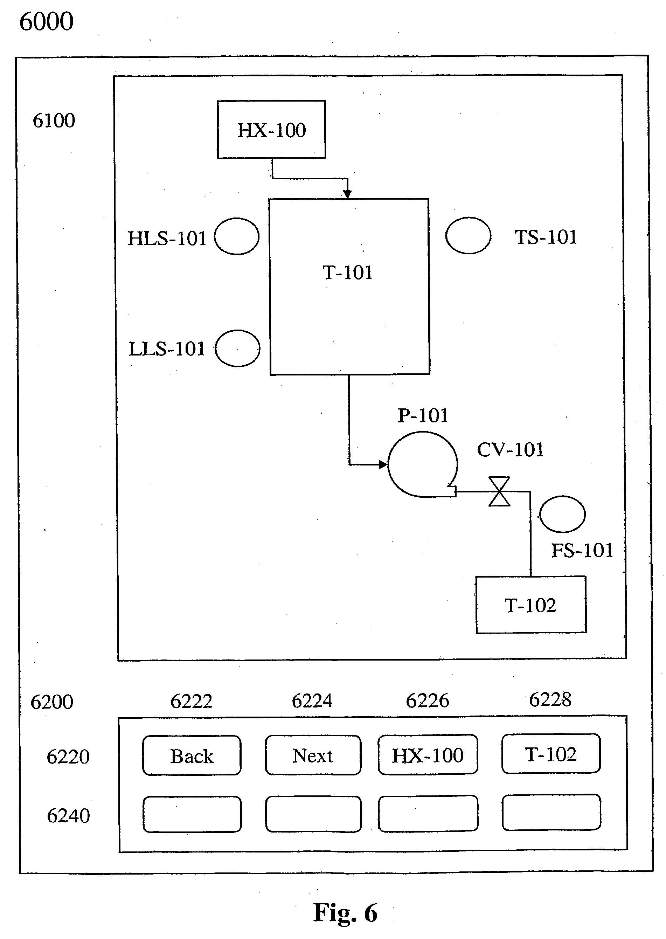

**FIG. 6** is a simplified diagram of exemplary embodiment of a user interface 6000 of a screen of an HMI, which can be useful for monitoring, programming, and/or controlling, an automated process, such as an automated industrial process. User interface 6000 can include a process graphic 6100, which can illustrate various components of an automated process and relationships between those components. User interface 6000 can include a navigation bar 6200, which can include a plurality of automatically and/or user-programmable navigation buttons 6220, and can also include additional, currently unutilized, buttons 6240. For example, navigation buttons 6220 can include a "Back" button 6222 that, when activated, can display a previously viewed screen in a sequence of screens. A "Next" button 6224, when activated, can display a subsequent screen in a sequence of screens. Related components buttons 6226 and 6228, when activated, can display a screen illustrating a process component that is related to a component of the present process graphic 6100. Any button can be associated with a navigation action, such as displaying a different screen and/or process graphic, changing a view of a current screen or process action, etc.

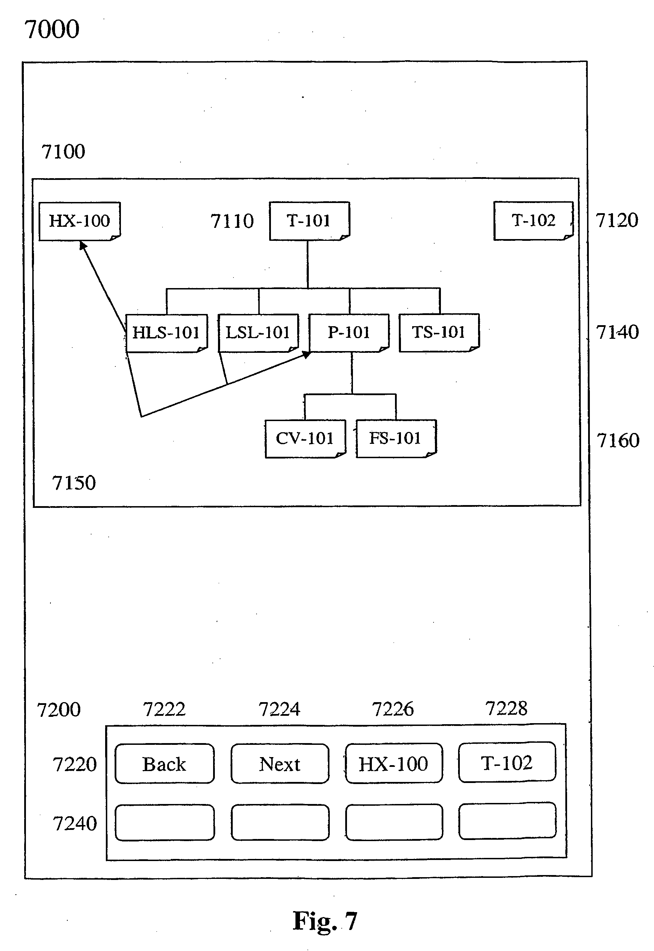

**FIG. 7** is a simplified diagram of exemplary embodiment of a user interface 7000 of a screen of an HMI screen navigation editor, which can be useful for creating, revising, and/or deleting HMI user screens and/or navigation controls for such screens. User interface 7000 can include a rendering and/or view 7100 of a collection of nodes 7150. The collection can include root nodes 7120 occupying a first level or generation. Any root node, such as root node 7110 can have one or more child nodes 7140, which can occupy a second generation. Any node in the second generation can have its own children, which are grandchildren nodes 7160 of the root, and which can occupy a third generation, and so forth.

To improve aesthetics of view 7100, each generation can be equally spaced from its adjacent generations, each node can be equally spaced from its adjacent nodes, and/or each parent can be aligned centrally to its children.

Certain nodes, such as the node labeled "HLS-101" can be linked to familial nodes, such as the node labeled P-101 and/or a non-familial node, such as the node labeled HX-100.

User interface 7000 can include a navigation bar 7200, which can include a plurality of automatically and/or user-programmable navigation buttons 7220, and can also include additional, currently unutilized, buttons 7240. For example, navigation buttons 7220 can include a "Back" button 7222 that, when activated, can display for example, a previously viewed screen in a sequence of screens, a sibling screen, and/or an adjacent screen, etc. A "Next" button 7224, when activated, can display for example, a subsequent screen in a sequence of screens, a sibling screen, and/or an adjacent screen, etc. Related components buttons 7226 and 7228, when activated, can display a screen illustrating a collection of nodes associated with a process component that is related to the collection of nodes 7150 for a process component of the present view 7100. Any button can be associated with a navigation action, such as displaying a different screen and/or process graphic, changing a view of a current screen or process action (e.g., zooming in, zooming out, panning, collapsing a node, expanding a node, and/or changing the visibility of a node, etc.), etc.

What follows is a description of a specific embodiment of method 5000. For a given HMI, a number of user interface screens can be displayed, some of which can descend from any one of several parent screens. To understand the relationships between the screens, a representation of a collection of screens can be presented as a hierarchically organized tree structure. Within the screen tree, each displayed screen can be represented as a "node", having, for example, a rectangular shape. A screen tree can be displayed as a vertical tree, with the children appearing below the parent, or as a horizontal tree, with the children appearing to the right of the parent. Since the algorithms are similar, only the algorithm of the vertical calculation will be explained. Within the algorithm, the variable name ScreenNavNode is used for a node.

Within the following algorithm, the following variable names are used:
1. SCRHEIGHT: node height, fixed
2. SCRWIDTH: node width, fixed
3. DISTY: Y distance between ScreenNavNodes, fixed
4. DIXTX: X distance between ScreenNavNodes, fixed
5. ScreenNavNode: a node, i.e., the representation of a screen. Some property of this object are:
   i. Nodes, which are either children of ScreenNavNode or a collection of nodes, of type ScreenNavNodes
   ii. Center: of type Point, the position of the ScreenNavNode
   iii. X, Y: the calculated X, Y position of the ScreenNavNode
   iv. Parent: parent of the ScreenNavNode
   v. FirstNode: First child of ScreenNavNode
   vi. LastNode: Last child of ScreenNavNode
   vii. PrevNode: Previous ScreenNavNode
   viii. Collapsed: A node is "collapsed" when its children nodes are not currently visible.
6. ScreenNavNodes: the collection of nodes.
7. Roots: a collection of nodes that do not have a parent, or the top level nodes. There can be more than one root for a given collection
8. Leaf node: a leaf node is a node that has no children, like a leaf on a tree that has no more branches
9. RightMost: an integer array (e.g., (X, Y)) to remember the current right most position, each level has a current rightMost for that level.
10. Level: Level of the tree.
11. Collision: when two nodes intersect or overlap.

There can be several subroutines executed within the algorithm, including any of the following:

**Calculate:** Initialize the nodes and rightmost array and call the recursive method CalculateNode, as follows:

```
    public void Calculate()
    {
        This method first checks to see if there are any nodes to
        calculate. If so then it clears all nodes in the collection
        and goes into CalculateNode with null, 0 as parameters
    }
```

**CalculateNode:** A recursive method that calculates the position of the ScreenNavNode. For a vertical tree, the vertical calculation (i.e., the Y position of the node) is easy, because it depends on only the level, i.e., sc.Y = Level*(DISTY+SCRHEIGHT) + SCRHEIGHT. Similarly, for a horizontal tree, the horizontal calculation (i.e., the X position of the node) is easy, as it depends on only the level. The CalculateNode subroutine is as follows:

```
    void CalculateNode(ScreenNavNode node, int Level)
    {
        If the node parameter is not null then the Y value of node
        is calculated by using the formula
        Level*(DISTY+SCRHEIGHT) + SCRHEIGHT.
        If the node parameter is null then all the child nodes of
        node is set to local variable called Children. If Children is
        null, then this method is exited.
        If the node parameter is not null and the node isn't in the
        collapsed state then two methods are called
        CalculateLeaf(node,Level) and
        ChangeVisible(node,false) then the method is exited.
        Else if node is not in the collapsed state the method
        ChangeVisible(node,true) is called.
        If the node has no children nodes then call the method
    CalculateLeaf(node,Level);
        Else call the method CalculateNode(child, Level+1)
        (which is recursive) for each of the child nodes (in which
        each single child node is the first parameter) inside of the
        Children collection.
    }
```

**CalculateLeaf:** Calculate for the leaf node, update parent when necessary.

```
    void CalculateLeaf(ScreenNavNode node, int Level)
     {
        The node parameter's X is calculated by the formula
        rightMost[Level] + SCRWIDTH + DISTX. The
        rightMost[Level] becomes node.X (update the rightMost
        value). Call the method UdateParentX(node, Level);
     }
```

**UpdateParentX:** Update the parent when there is collision. void UpdateParentX(ScreenNavNode node, int Level)

```
     {
        If the node parameter is null or the Level is less then 0,
     exit out of this method.
        If the node parameter is not the last child of the parent,
     exit out of this method.
        Set an internal variable FirstScreen to
     sc.NodeParent.FirstNode.
        Set a local int variable ParentX to FirstScreen.Center.X +
        node.Center.X/2. This formal is to ensure that the parent
        is in the middle of the first and last child. Then set
        ParentScreen.X to ParentX.
        Set a local variable ParentLeftScreen to
        ParentScreen.PrevNode (which is the parent's left
        screen)
        If ParentLeftScreen is not equal to null and if there is
        going to be a collision with the parent's left screen then
        create the variable ShiftDist which is SCRWIDTH +
        DISTX - ParentX + ParentLeftScreen.Center.X and pass
        it to the method ShiftRight(ParentScreen, ShiftDist, Level
        -1) which will shift the parent screen to the right.
        Else if the ParentLeftScreen is equal to null then check
        for left collisions several levels up. If there is a collusion
        - the then create the variable ShiftDist which is SCRWIDTH
        + DISTX-ParentX + rightMost[Level-1] and pass it to the
        method ShiftRight(ParentScreen, ShiftDist, Level-1)
        which will shift the parent screen to the right.
        Update the rightmost node of the parent by setting
        rightMost[Level-1] equal to ParentScreen.X;
        Finally recursively update the parent by calling the
        method UpdateParentX(ParentScreen, Level-1).
    }
```

**ShiftRight:** The method to shift all its children to right by distance X void ShiftRight(ScreenNavNode node, int X, int currentLevel) { Shift the node parameter to the right by setting node.X to node.X plus X. If node.X is greater then the rightmost at the current level, then set the rightmost as the current level to node.X. Shift all the child nodes of the parameter node. Do this by calling your own method ShiftRight(child, X, currentLevel+1). }

**ChangeVisible:** Change the visibility of the node and its children. private void ChangeVisible(ScreenNavNode node, bool Visible)

```
    {
        If the parameter node is null or the node has no children,
    then exit the method.
        For each of the child nodes of node, set their visible
        property to Visible. If Visible equals false the call the
        method ChangeVisible(child,false).
    }
```

Still other embodiments will become readily apparent to those skilled in this art from reading the above-recited detailed description and drawings of certain exemplary embodiments. It should be understood that numerous variations, modifications, and additional embodiments are possible, and accordingly, all such variations, modifications, and embodiments are to be regarded as being within the scope of the appended claims. For example, regardless of the content of any portion (e.g., title, field, background, summary, abstract, drawing figure, etc.) of this application, unless clearly specified to the contrary, there is no requirement for the inclusion in any claim of the application of any particular described or illustrated activity or element, any particular sequence of such activities, or any particular interrelationship of such elements. Moreover, any activity can be repeated, any activity can be performed by multiple entities, and/or any element can be duplicated. Further, any activity or element can be excluded, the sequence of activities can vary, and/or the interrelationship of elements can vary. Accordingly, the descriptions and drawings are to be regarded as illustrative in nature, and not as restrictive.

Moreover, when any number or numerical range is described herein, unless clearly stated otherwise, that number or range is approximate. When any numerical range is described herein, unless clearly stated otherwise, that range includes all numbers therein and all subranges therein.

## Claims

1. A method for configuring HMI user screen navigation comprising the steps of:
providing (3100, 4100) an HMI screen navigation editor to a user;
via the HMI screen navigation editor, enabling (3200, 4200) the user to create a collection comprising a linked hierarchically organized plurality of HMI screen nodes;
responsive to a detected collision (5300) between the position of a leaf node (5100) and the position of a parent node (5200) of said linked hierarchically organized plurality of HMI screen nodes, or between the position of the parent node and another node, recursively adjusting (5400) a position of said parent node until no collisions are detected, the collision being determined based upon said adjusted position of said parent node and a calculated position of said leaf, child, or other node; and
rendering (5500) the collection to the user.

2. The method of claim 1, further comprising:
receiving (3200) from the user a specification of an HMI root screen node.

3. The method of claim 1, further comprising:
receiving (3200) from the user a specification of an HMI child screen node, the HMI child screen node a descendent of an HMI root screen node.

4. The method of claim 1, further comprising:
receiving (3200) from the user a specification of a relationship between two of the plurality of HMI screen nodes.

5. The method of claim 1, further comprising:
receiving (3200) from the user a specification of an organization of the collection.

6. The method of claim 1, further comprising:
receiving (3200) from the user a specification of a hierarchy of the collection.

7. The method of claim 1, further comprising:
determining (3300) an arrangement of the collection.

8. The method of claim 1, further comprising:
receiving (3200) from the user a specification of a size of the plurality of HMI screen nodes.

9. The method of claim 1, further comprising:
zooming a rendition of the plurality of HMI screen nodes.

10. The method of claim 1, further comprising:
panning a rendition of the plurality of HMI screen nodes.

11. The method of claim 1, further comprising:
collapsing a rendition of the plurality of HMI screen nodes.

12. The method of claim 1, further comprising:
expanding a rendition of the plurality of HMI screen nodes.

13. The method of claim 1, further comprising:
rotating a rendition of the plurality of HMI screen nodes.

14. The method of claim 1, further comprising:
rendering (3400) a portion of the plurality of HMI screen nodes.

15. The method of claim 1, further comprising:
enabling the user to revise the collection.

16. The method of claim 1, further comprising:
enabling the user to revise at least one of the plurality of HMI screen nodes.

17. The method of claim 1, further comprising:
receiving a user specification of an attribute of an HMI screen node.

18. The method of claim 1, further comprising:
receiving a user specification of an attribute of the collection.

19. The method of claim 1, further comprising:
receiving (4200) from the user a specification of a link between two HMI screen nodes.

20. The method of claim 1, further comprising:
receiving (4200) from the user a specification of a link from a first HMI screen node to a second HMI screen node, the second HMI screen node non-familial to the first HMI screen node.

21. The method of claim 1, further comprising:
rendering a link between two HMI screen nodes;

22. The method of claim 1, further comprising:
rendering a link from a first HMI screen node to a second HMI screen node, the second HMI screen node non-familial to the first HMI screen node.

23. The method of claim 1, further comprising:
receiving (4200) from the user a specification of a navigation control comprising at least one HMI screen link.

24. The method of claim 1, further comprising:
rendering (4400) a navigation control comprising at least one HMI screen link.

25. The method of claim 1, further comprising:
receiving (4200) from the user a specification of a navigation control comprising at least one button.

26. The method of claim 1, further comprising:
rendering (4400) a navigation control comprising at least one button.

27. The method of claim 1, further comprising:
receiving (4200) from the user a specification of a navigation control comprising at least one button, the at least one button comprising an HMI screen link.

28. The method of claim 1, further comprising:
rendering (4400) a navigation control comprising at least one button, the at least one button comprising an HMI screen link.

29. The method of claim 1, further comprising:
receiving (4200) from the user a specification of a navigation control comprising at least one button, the at least one button comprising an HMI screen link, the at least one button activatable via a user-specified soft key.

30. The method of claim 1, further comprising:
rendering (4400) a navigation control comprising at least one button, the at least one button comprising an HMI screen link, the at least one button activatable via a user-specified soft key.

31. The method of claim 1, further comprising:
receiving (4200) from the user a specification of a navigation control comprising at least one element activatable via a user-specified soft key.

32. The method of claim 1, further comprising:
rendering (4400) a navigation control comprising at least one element activatable via a user-specified soft key.

33. A machine-readable medium containing instructions which, when executed on a computer, cause the computer to perform the steps of the method of claim 1.

34. A device for providing a representation of user screens for an HMI comprising an HMI screen navigation editor operatively adapted to perform the steps of the method of claim 1.

## Patentansprüche

1. Verfahren zum Konfigurieren der Navigation auf einem HMI-Benutzerbildschirm, welches die folgenden Schritte umfasst:
Bereitstellen (3100, 4100) eines HMI-Bildschirm-Navigationseditors für einen Benutzer;
über den HMI-Bildschirm-Navigationseditor, Befähigen (3200, 4200) des Benutzers, eine Sammlung zu erzeugen, die eine verbundene, hierarchisch organisierte Vielzahl von HMI-Bildschirmknoten umfasst;
in Reaktion auf eine erkannte Kollision (5300) zwischen der Position eines Blattknotens (5100) und der Position eines Elternknotens (5200) dieser verbundenen, hierarchisch organisierten Vielzahl von HMI-Bildschirmknoten oder zwischen der Position des Elternknotens und eines anderen Knotens, rekursives Korrigieren (5400) einer Position dieses Elternknotens, bis keine Kollisionen erkannt werden, wobei die Kollision basierend auf der korrigierten Position des Elternknotens und einer berechneten Position des Blatt-, Kind- oder anderen Knotens bestimmt wird; und
Wiedergeben (5500) der Sammlung für den Benutzer.

2. Verfahren nach Anspruch 1, welches ferner umfasst:
Empfangen (3200), von dem Benutzer, einer Spezifikation eines HMI-Wurzel-Bildschirmknotens.

3. Verfahren nach Anspruch 1, welches ferner umfasst:
Empfangen (3200), von dem Benutzer, einer Spezifikation eines HMI-Kind-Bildschirmknotens, wobei der HMI-Kind-Bildschirmknoten ein Nachkomme eines HMI-Wurzel-Bildschirmknotens ist.

4. Verfahren nach Anspruch 1, welches ferner umfasst:
Empfangen (3200), von dem Benutzer, einer Spezifikation einer Beziehung zwischen zweien aus der Vielzahl von HMI-Bildschirmknoten.

5. Verfahren nach Anspruch 1, welches ferner umfasst:
Empfangen (3200), von dem Benutzer, einer Spezifikation einer Organisation der Sammlung.

6. Verfahren nach Anspruch 1, welches ferner umfasst:
Empfangen (3200), von dem Benutzer, einer Spezifikation einer Hierarchie der Sammlung.

7. Verfahren nach Anspruch 1, welches ferner umfasst:
Bestimmen (3300) einer Anordnung der Sammlung.

8. Verfahren nach Anspruch 1, welches ferner umfasst:
Empfangen (3200), von dem Benutzer, einer Spezifikation einer Größe der Vielzahl von HMI-Bildschirmknoten.

9. Verfahren nach Anspruch 1, welches ferner umfasst:
Zoomen einer Wiedergabe der Vielzahl von HMI-Bildschirmknoten.

10. Verfahren nach Anspruch 1, welches ferner umfasst:
Schwenken einer Wiedergabe der Vielzahl von HMI-Bildschirmknoten.

11. Verfahren nach Anspruch 1, welches ferner umfasst:
Stauchen einer Wiedergabe der Vielzahl von HMI-Bildschirmknoten.

12. Verfahren nach Anspruch 1, welches ferner umfasst:
Aufweiten einer Wiedergabe der Vielzahl von HMI-Bildschirmknoten.

13. Verfahren nach Anspruch 1, welches ferner umfasst:
Drehen einer Wiedergabe der Vielzahl von HMI-Bildschirmknoten.

14. Verfahren nach Anspruch 1, welches ferner umfasst:
Wiedergeben (3400) eines Teils der Vielzahl von HMI-Bildschirmknoten.

15. Verfahren nach Anspruch 1, welches ferner umfasst:
Befähigen des Benutzers, die Sammlung zu revidieren.

16. Verfahren nach Anspruch 1, welches ferner umfasst:
Befähigen des Benutzers, wenigstens einen aus der Vielzahl von HMI-Bildschirmknoten zu revidieren.

17. Verfahren nach Anspruch 1, welches ferner umfasst:
Empfangen einer Benutzerspezifikation eines Attributs eines HMI-Bildschirmknotens.

18. Verfahren nach Anspruch 1, welches ferner umfasst:
Empfangen einer Benutzerspezifikation eines Attributs der Sammlung.

19. Verfahren nach Anspruch 1, welches ferner umfasst:
Empfangen (4200), von dem Benutzer, einer Spezifikation einer Verbindung zwischen zwei HMI-Bildschirmknoten.

20. Verfahren nach Anspruch 1, welches ferner umfasst:
Empfangen (4200), von dem Benutzer, einer Spezifikation einer Verbindung von einem ersten HMI-Bildschirmknoten zu einem zweiten HMI-Bildschirmknoten, wobei der zweite HMI-Bildschirmknoten nicht mit dem ersten HMI-Bildschirmknoten verwandt ist.

21. Verfahren nach Anspruch 1, welches ferner umfasst:
Wiedergeben einer Verbindung zwischen zwei HMI-Bildschirmknoten.

22. Verfahren nach Anspruch 1, welches ferner umfasst:
Wiedergeben einer Verbindung von einem ersten HMI-Bildschirmknoten zu einem zweiten HMI-Bildschirmknoten, wobei der zweite HMI-Bildschirmknoten nicht mit dem ersten HMI-Bildschirmknoten verwandt ist.

23. Verfahren nach Anspruch 1, welches ferner umfasst:
Empfangen (4200), von dem Benutzer, einer Spezifikation einer Navigationssteuerung, welche wenigstens eine HMI-Bildschirmverbindung umfasst.

24. Verfahren nach Anspruch 1, welches ferner umfasst:
Wiedergeben (4400) einer Navigationssteuerung, welche wenigstens eine HMI-Bildschirmverbindung umfasst.

25. Verfahren nach Anspruch 1, welches ferner umfasst:
Empfangen (4200), von dem Benutzer, einer Spezifikation einer Navigationssteuerung, welche wenigstens eine Schaltfläche umfasst.

26. Verfahren nach Anspruch 1, welches ferner umfasst:
Wiedergeben (4400) einer Navigationssteuerung, welche wenigstens eine Schaltfläche umfasst.

27. Verfahren nach Anspruch 1, welches ferner umfasst:
Empfangen (4200), von dem Benutzer, einer Spezifikation einer Navigationssteuerung, welche wenigstens eine Schaltfläche umfasst, wobei die wenigstens eine Schaltfläche eine HMI-Bildschirmverbindung umfasst.

28. Verfahren nach Anspruch 1, welches ferner umfasst:
Wiedergeben (4400) einer Navigationssteuerung, welche wenigstens eine Schaltfläche umfasst, wobei die wenigstens eine Schaltfläche eine HMI-Bildschirmverbindung umfasst.

29. Verfahren nach Anspruch 1, welches ferner umfasst:
Empfangen (4200), von dem Benutzer, einer Spezifikation einer Navigationssteuerung, welche wenigstens eine Schaltfläche umfasst, wobei die wenigstens eine Schaltfläche eine HMI-Bildschirmverbindung umfasst, wobei die wenigstens eine Schaltfläche über eine benutzerspezifizierte Bildschirmtaste aktivierbar ist.

30. Verfahren nach Anspruch 1, welches ferner umfasst:
Wiedergeben (4400) einer Navigationssteuerung, welche wenigstens eine Schaltfläche umfasst, wobei die wenigstens eine Schaltfläche eine HMI-Bildschirmverbindung umfasst, wobei die wenigstens eine Schaltfläche über eine benutzerspezifizierte Bildschirmtaste aktivierbar ist.

31. Verfahren nach Anspruch 1, welches ferner umfasst:
Empfangen (4200), von dem Benutzer, einer Spezifikation einer Navigationssteuerung, welche wenigstens ein Element umfasst, das über eine benutzerspezifizierte Bildschirmtaste aktivierbar ist.

32. Verfahren nach Anspruch 1, welches ferner umfasst:
Wiedergeben (4400) einer Navigationssteuerung, welche wenigstens ein Element umfasst, das über eine benutzerspezifizierte Bildschirmtaste aktivierbar ist.

33. Maschinenlesbares Medium, das Anweisungen enthält, welche, wenn sie auf einem Rechner ausgeführt werden, bewirken, dass der Rechner die Schritte des Verfahrens nach Anspruch 1 ausführt.

34. Vorrichtung zum Bereitstellen einer Darstellung von Benutzerbildschirmen für eine HMI, welche einen HMI-Bildschirm-Navigationseditor umfasst, der betriebsmäßig dafür eingerichtet ist, die Schritte des Verfahrens nach Anspruch 1 auszuführen.

## Revendications

1. Procédé de configuration de la navigation entre les écrans utilisateurs d'une IHM comprenant les étapes consistant :
à fournir (3100, 4100) à un utilisateur un éditeur de navigation entre écrans d'IHM ;
au moyen de l'éditeur de navigation entre écrans d'IHM, à permettre (3200, 4200) à l'utilisateur de créer une collection comprenant une pluralité liée et organisée de manière hiérarchique de noeuds d'écrans d'IHM ;
en réaction à la détection d'une collision (5300) entre la position d'un noeud feuille (5100) et la position d'un noeud parent (5200) de ladite pluralité liée et organisée de manière hiérarchique de noeuds d'écrans d'IHM, ou entre la position du noeud parent et un autre noeud, à ajuster de manière récurrente (5400) une position dudit noeud parent jusqu'à ce qu'aucune collision ne soit détectée, la collision étant déterminée sur la base de ladite position ajustée dudit noeud parent et d'une position calculée dudit noeud feuille, enfant ou autre, et
à présenter (5500) la collection à l'utilisateur.

2. Procédé selon la revendication 1, consistant par ailleurs :
à recevoir (3200) de l'utilisateur une spécification d'un noeud racine d'écran d'IHM.

3. Procédé selon la revendication 1, consistant par ailleurs :
à recevoir (3200) de l'utilisateur une spécification d'un noeud enfant d'écran d'IHM, le noeud enfant d'écran d'IHM étant un descendant d'un noeud racine d'écran d'IHM.

4. Procédé selon la revendication 1, consistant par ailleurs :
à recevoir (3200) de l'utilisateur une spécification d'une relation entre deux noeuds de la pluralité de noeuds d'écrans d'IHM.

5. Procédé selon la revendication 1, consistant par ailleurs :
à recevoir (3200) de l'utilisateur une spécification d'une organisation de la collection.

6. Procédé selon la revendication 1, consistant par ailleurs :
à recevoir (3200) de l'utilisateur une spécification d'une hiérarchie de la collection.

7. Procédé selon la revendication 1, consistant par ailleurs :
à déterminer (3300) un agencement de la collection.

8. Procédé selon la revendication 1, consistant par ailleurs :
à recevoir (3200) de l'utilisateur une spécification d'une taille de la pluralité de noeuds d'écrans d'IHM.

9. Procédé selon la revendication 1, consistant par ailleurs :
à zoomer sur une présentation de la pluralité de noeuds d'écrans d'IHM.

10. Procédé selon la revendication 1, consistant par ailleurs :
à faire un panoramique d'une présentation de la pluralité de noeuds d'écrans d'IHM.

11. Procédé selon la revendication 1, consistant par ailleurs :
à réduire une présentation de la pluralité de noeuds d'écrans d'IHM.

12. Procédé selon la revendication 1, consistant par ailleurs :
à agrandir une présentation de la pluralité de noeuds d'écrans d'IHM.

13. Procédé selon la revendication 1, consistant par ailleurs :
à appliquer une rotation à une présentation de la pluralité de noeuds d'écrans d'IHM.

14. Procédé selon la revendication 1, consistant par ailleurs :
à présenter (3400) une partie de la pluralité de noeuds d'écrans d'IHM.

15. Procédé selon la revendication 1, consistant par ailleurs :
à permettre à l'utilisateur de réviser la collection.

16. Procédé selon la revendication 1, consistant par ailleurs :
à permettre à l'utilisateur de réviser au moins un noeud de la pluralité de noeuds d'écrans d'IHM.

17. Procédé selon la revendication 1, consistant par ailleurs :
à recevoir une spécification utilisateur d'un attribut d'un noeud d'écran d'IHM.

18. Procédé selon la revendication 1, consistant par ailleurs :
à recevoir une spécification utilisateur d'un attribut de la collection.

19. Procédé selon la revendication 1, consistant par ailleurs :
à recevoir (4200) de l'utilisateur une spécification d'un lien entre deux noeuds d'écrans d'IHM.

20. Procédé selon la revendication 1, consistant par ailleurs :
à recevoir (4200) de l'utilisateur une spécification d'un lien allant d'un premier noeud d'écran d'IHM à un second noeud d'écran d'IHM, le second noeud d'écran d'IHM étant non familial par rapport au premier noeud d'écran d'IHM.

21. Procédé selon la revendication 1, consistant par ailleurs :
à présenter un lien entre deux noeuds d'écrans d'IHM.

22. Procédé selon la revendication 1, consistant par ailleurs :
à présenter un lien allant d'un premier noeud d'écran d'IHM à un second noeud d'écran d'IHM, le second noeud d'écran d'IHM étant non familial par rapport au premier noeud d'écran d'IHM.

23. Procédé selon la revendication 1, consistant par ailleurs :
à recevoir (4200) de l'utilisateur une spécification d'une commande de navigation comprenant au moins un lien entre écrans d'IHM.

24. Procédé selon la revendication 1, consistant par ailleurs :
à présenter (4400) une commande de navigation comprenant au moins un lien entre écrans d'IHM.

25. Procédé selon la revendication 1, consistant par ailleurs :
à recevoir (4200) de l'utilisateur une spécification d'une commande de navigation comprenant au moins un bouton.

26. Procédé selon la revendication 1, consistant par ailleurs :
à présenter (4400) une commande de navigation comprenant au moins un bouton.

27. Procédé selon la revendication 1, consistant par ailleurs :
à recevoir (4200) de l'utilisateur une spécification d'une commande de navigation comprenant au moins un bouton, l'au moins un bouton comprenant un lien vers des écrans d'IHM.

28. Procédé selon la revendication 1, consistant par ailleurs :
à présenter (4400) une commande de navigation comprenant au moins un bouton, l'au moins un bouton comprenant un lien vers des écrans d'IHM.

29. Procédé selon la revendication 1, consistant par ailleurs :
à recevoir (4200) de l'utilisateur une spécification d'une commande de navigation comprenant au moins un bouton, l'au moins un bouton comprenant un lien vers des écrans d'IHM, l'au moins un bouton étant activable au moyen d'une touche programmable spécifiée par l'utilisateur.

30. Procédé selon la revendication 1, consistant par ailleurs :
à présenter (4400) une commande de navigation comprenant au moins un bouton, l'au moins un bouton comprenant un lien vers des écrans d'IHM, l'au moins un bouton étant activable au moyen d'une touche programmable spécifiée par l'utilisateur.

31. Procédé selon la revendication 1, consistant par ailleurs :
à recevoir (4200) de l'utilisateur une spécification d'une commande de navigation comprenant au moins un élément activable au moyen d'une touche programmable spécifiée par l'utilisateur.

32. Procédé selon la revendication 1, consistant par ailleurs :
à présenter (4400) une commande de navigation comprenant au moins un élément activable au moyen d'une touche programmable spécifiée par l'utilisateur.

33. Support lisible en machine contenant des instructions qui, lorsqu'elles sont exécutées sur un ordinateur, amènent l'ordinateur à exécuter les étapes du procédé selon la revendication 1.

34. Dispositif permettant de fournir une représentation d'écrans utilisateurs destinés à une IHM,
comprenant un éditeur de navigation entre écrans d'IHM adapté fonctionnellement en vue d'exécuter les étapes du procédé selon la revendication 1.
